# EUROPEAN PATENT APPLICATION

(11) **EP 4 201 205 A2**
(43) Date of publication of application: **28.06.2023**
(21) Application number: 22215331.4
(22) Date of filing: 21.12.2022
(51) Int. Cl.: A01N 65/08, A01P 7/02

(54) **USE OF NATURAL COMPOUNDS AS ACARICIDES**

(30) Priority: 21.12.2021 IT 202100032030
(71) Applicant: Gonella Invent Societa' A Responsabilita' Limitata Semplificata, 12046 Montà (IT)
(72) Inventor: GONELLA, Silvio, 12046 Monta' (IT)
(74) Representative: Zaccaro, Elisabetta

(57) **Abstract**

The invention concerns the use of an extract or a tincture of *Schisandra spp.,* preferably of *Schisandra chinensis* as an acaricide and mite repellent. The use of a composition comprising such *Schisandra chinensis* extract, wherein said extract is the only active ingredient, as an acaricide and mite repellent, is also described. The invention also relates to a composition comprising an extract of *Schisandra spp.,* as a complementary feed.

Finally, a method for treating a substrate, comprising the step of treating said substrate with an extract of *Schisandra chinensis* or with a composition comprising such an extract, is described.

## Description

### FIELD OF THE INVENTION

The invention concerns the use of an extract or a tincture of *Schisandra spp.* as an acaricide and mite repellent. The use of a composition comprising such *Schisandra chinensis* extract as an acaricide and mite repellent, wherein said extract is the only active ingredient, is also disclosed. The invention further relates to a composition comprising a *Schisandra spp.* extract, as a complementary feed.

Finally, a method for treating a substrate, comprising the step of applying to said substrate an extract of *Schisandra chinensis* or a composition comprising such an extract, is disclosed.

### STATE OF THE ART

In the last decade, the landscape of European agriculture and agrochemistry has been undergoing a great evolution, many insecticide active ingredients and the corresponding commercial formulations were or will be withdrawn due to their marked toxicity for humans and the environment, or the low affinity/selectivity towards pollinating insects.

Indiscriminate use of synthetic pesticides has also led to accumulation of toxic residues in foodstuffs, soil, and water, as well as the development of resistance by insects against the few active ingredients that can be used.

Given this situation, there is an increasing interest in sustainable agriculture and the use of substances alternative to synthetic agrochemicals that present less risk to the environment and human health, while increasing food safety.

Sustainable agriculture aims to ensure human health and nutrition, while ensuring respect for natural resources and biodiversity.

The Food and Agriculture Organization (FAO), an organization headed by the United Nations, has drawn up the cornerstones of sustainable agriculture, which include the conservation of the environment by avoiding soil deterioration, the containment of water sources pollution, and the fight against the destruction of habitats and ecosystems.

In recent years, to overcome the issues encountered with toxic insecticide active ingredients, research has focused on substances of natural origin (botanicals), alternative to synthetic chemical agrochemicals, which guarantee a result while safeguarding human health and minimizing environmental impact.

Substances of natural origin have the advantage of having low toxicity towards non-target organisms, not polluting the environment, having a fast degradation and therefore having a very low M.R.L. on the product of vegetable origin treated, and having a high efficacy.

On the market there are various substances of natural origin based on terpenes or alkaloids (starting skeleton for the subsequent synthesis of more stable and less toxic formulations) currently used as insecticides or fungicides.

However, some secondary metabolites have application issues, sometimes there are too low amounts in the extract and, despite the potential described in the laboratory, some substances, if not microencapsulated, have intrinsic characteristics that limit their use, such as volatility, flammability risk and phytotoxicity, in addition to low persistence of the treatment (such as, for example, terpenes).

Alkaloids and other chemical families naturally present in plant extracts, on the other hand, can have acute and chronic toxicity on humans and animals and may be not selective towards pollinating insects. Therefore, the description of plant extract is not always sufficient to ensure low toxicity towards the operator and the consumer. Furthermore, problems of low stability and other technical aspects that discourage the research and development of compounds of natural origin are often encountered.

There is a need to further develop and promote sustainable agriculture, having a lower environmental impact and improving the quality of the crop.

The present invention has the purpose of providing a new use as insecticide, acaricide and insect repellent to compounds of natural origin which do not have disadvantages related to the low stability found in other compounds of natural origin, while being compatible with the environment and avoiding to pollute natural resources and food for human and animal consumption.

### SUMMARY OF THE INVENTION

The invention therefore concerns the use of an extract or a tincture of *Schisandra spp.*, preferably of *Schisandra chinensis* as an acaricide and mite repellent, by influencing the oviposition, said extract comprising at least the lignans selected from the group consisting of: schisandrin, schisandrol B, and schisantherin A.

As will be apparent from the detailed description of the invention, the above lignans have several synonyms. Some of the synonyms and the relative CAS Registry number are therefore listed.

According to the present invention, the term "schisandrin" is used to identify schisandrin A, schisandrin B and/or schisandrin C, or an alcohol thereof, such as for example schisandrol A, schisandrol B or schisandrol C, or a combination thereof. *Schisandra chinensis* spp., also known by the name Schizandra, is an oriental native shrub, characteristic of North America and Asia (China, Korea, and Russia). Preferring humid environments, Schisandra grows well on soils rich in organic matter, where it gives rise to small red fruits, known in Chinese as *wu wei zin* or "Five Flavor Fruit". These berries are classically used for food purposes as dried fruit, or in the preparation of infusions, teas, wines, and other beverages. Schisandra berries were used both in ancient traditional Chinese medicine and in Russia to improve physical and mental abilities.

According to a modern taxonomic classification, the genus Schisandra belongs to the Illiciaceae family, sub-class Magnoliidae; they are plants with particular characteristics especially as regards the production of secondary metabolites, present in this genus and in a few others in nature (many times only in trace amounts) the Schisandrins.

In this case, under the name of Schisandrins are chemically included all the lignans naturally present in the dry extract of any portion of this plant genus; Schisandrins are listed below, both as chemical formula and as lactone derivatives, and any isomers present, which are directly responsible for the acaricide activity.

In a second aspect, the present invention concerns the use of a composition comprising an extract of *Schisandra chinensis* as a mite repellent by influencing its oviposition, wherein:
- said *Schisandra chinensis* extract comprises at least the lignans selected from the group consisting of: schisandrin, schisandrol B, and schisantherin A;
- said extract of *Schisandra chinensis* is the only active ingredient of said composition; and
- said composition comprises a carrier, additive, emulsifier, surfactant, adjuvant and/or diluent acceptable in the agrochemical field or the veterinary field, preferably in the beekeeping field.

In a third aspect, the present invention describes a composition comprising an extract of *Schisandra spp.,* preferably of *Schisandra chinensis* as a complementary feed, wherein:
- said *Schisandra chinensis* extract comprises at least the lignans selected from the group consisting of: schisandrin, schisandrol B, and schisantherin A; and
- said composition comprises excipients suitable for the final formulation.

In a fourth aspect, a method for the treatment of a substrate comprising the step of applying to said substrate an effective dose of an extract of *Schisandra spp.,* preferably of *Schisandra chinensis* or a composition comprising an extract of *Schisandra chinensis.* Wherein said extract is the only active ingredient of said composition.

The dependent claims describe particular embodiments of the invention.

### DETAILED DESCRIPTION OF THE INVENTION

The invention concerns the use of an extract or a tincture of *Schisandra spp.,* preferably of *Schisandra chinensis* as an acaricide and mite repellent, said extract comprising at least the lignans selected from the group consisting of: schisandrin, schisandrol B, and schisanterin A.

The author has surprisingly found that the extract and the composition according to the present invention have both acaricide and repellent activity on mites by influencing their oviposition for the control of harmful mites of agricultural crops and other plants and bee parasitic mites.

Said Schisandrin-based extract may be used in particular for the control of larvae or other mites present on these plants.

When the present invention employs the definition:
- "Schisandrin A" or "Schizandrin A", it is intended to include: (6R,7S)-1,2,3,10,11,12-Hexamethoxy-6,7-dimethyl-5,6,7,8-tetrahydrodibenzo[a,c][8]annulene, having the Chemical Abstracts Registry Number (CAS RN) 61281-38-7. Other names for schisandrin A are: Deoxyschizandrin (deoxyschisandrin); Dimethylgomisin J 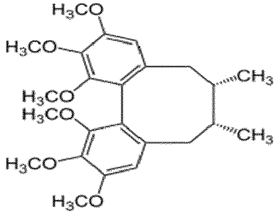 Schisandrol A is an alcohol thereof, with CAS RN 7432-28-2 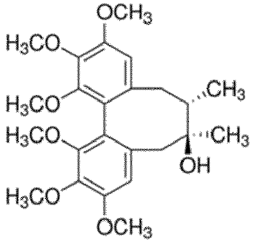
- "Schisandrin B" is intended to comprise: rel-(6R,7S,13aR)-5,6,7,8-Tetrahydro-1,2,3,13-tetramethoxy-6,7-dimethylbenzo[3,4]cycloocta[1,2-f][1,3]benzodioxole, having CAS RN 61281-37-6. Other names: Schizandrin B, γ-Schizandrin, γ-Schisandrin, Wuweizisu B 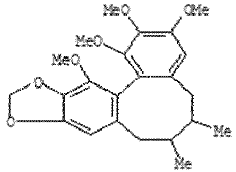
- "Schisandrin C" is intended to comprise: (6R,7S,13aS)-5,6,7,8-Tetrahydro-13,14-dimethoxy-6,7-dimethylcycloocta[1,2-f:3,4-f']bis[1,3]benzodioxole, having CAS RN 61301-33-5. Other names: Wuweizisu C, Schizandrin C 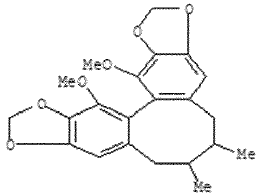
- "Schisandrol B" or "schizandrol B" is intended to comprise: (6S,7S)-1,2,3,13-Tetramethoxy-6,7-dimethyl-5,6,7,8-tetrahydro-11-H-benzo[3,4]cycloocta[1,2-f][1,3]benzodiox-6-ol, having CAS RN 58546-54-6. Other names: Gomisin A, Besigomsin; Schizandrol B 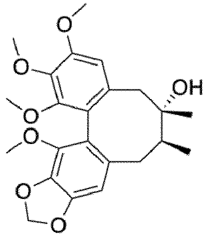
- "Schisantherin A": is intended to comprise: Benzo[3,4]cycloocta[1,2-f][1,3]benzodioxole-5,6-diol, 5,6,7,8-tetrahydro-1 ,2,3,13-tetramethoxy-6,7-dimethyl-5-benzoate, stereoisomer, CAS RN 58546-56-8 and other names: Gomisin C, Schizantherin A, Wuweizi ester A 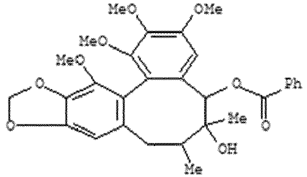
- "Gomisin B" is intended to comprise: 2-Butenoic acid, 2-methyl-, 5,6,7,8-tetrahydro-6-hydroxy-1,2,3,13-tetramethoxy-6,7-dimethylbenzo[3,4]cycloocta[1,2-f][1,3]benzodioxol-5-yl ester, stereoisomer, having CAS RN 58546-55-7 and other names:
   Schisantherin B, Schizantherin B, Wuweizi ester B 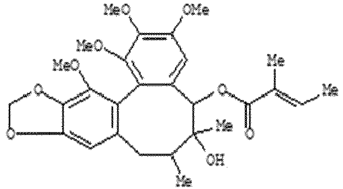
- "Gomisin N" is intended to comprise: (6R,7S,13aS)-5,6,7,8-Tetrahydro-1,2,3,13-tetramethoxy-6,7-dimethylbenzo[3,4]cycloocta[1,2-f][1,3]benzodioxole, having CAS RN 69176-52-9 and Other names: Gomisine N 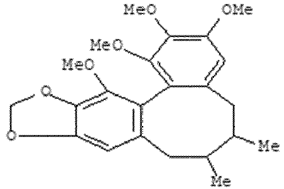
- "Pregomisin" is intended to comprise: Phenol, 3,3'-(2,3-dimethyl-1,4-butanediyl)bis[5,6-dimethoxy-, (R*,S*)-, having CAS RN 69176-52-9 and as other names: Pregomisine, 3,3'-Dihydroxy-4,4',5,5'-tetramethoxylignan

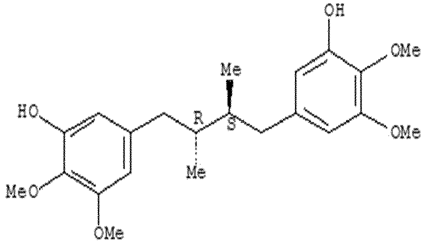

In a second aspect, the present invention concerns the use of a composition comprising an extract of *Schisandra spp.,* preferably of *Schisandra chinensis* as an acaricide and mite repellent, by influencing oviposition, wherein:
- said extract of *Schisandra spp.,* in particular of *Schisandra chinensis* comprises at least the lignans selected from the group consisting of: schisandrin, schisandrol B, and schisantherin A;
- said extract of *Schisandra spp.,* in particular of *Schisandra chinensis* is the only active ingredient of said composition; and
- said composition comprises a carrier, additive, emulsifier, surfactant, adjuvant and/or diluent acceptable in the agrochemical field or in the veterinary field, preferably in beekeeping.

In a third aspect, the present invention describes a composition comprising an extract of *Schisandra spp.,* preferably of *Schisandra chinensis* as a complementary feed, wherein:
- said *Schisandra chinensis* extract comprises at least the lignans selected from the group consisting of: schisandrin, schisandrol B, and schisantherin A; and
- said composition comprises excipients suitable for the final formulation.

The extract, composition, or complementary feed according to the present invention may further comprise one or more further lignans, for example lignans selected from the group consisting of: gomisin B, gomisin N and pregomisin.

In an even more preferred form, said extract further comprises one or more sugars and one or more vitamins. Sugars are preferably dextrose, sucrose, or fructose, while vitamins are preferably vitamin A or vitamin C. In the extract and composition according to the present invention, the "schisandrin" may be schisandrin A, schisandrin B and/or schisandrin C, or an alcohol thereof, such as schisandrol A, schisandrol B or schisandrol C.

The composition of the present invention may be formulated in the form of a WG or WDG granulate, PB powder, EC or EW emulsion, SC concentrate suspension, OD oil dispersion, spray, aerosol, microencapsulate, gel or wetting agent, and may be classified as a crop protection product/insecticide/complementary zootechnical feed. Examples of emulsifiers of the composition according to the invention are solvents selected from the group consisting of: polar organic solvents (alcohols, ketones, aldehydes and sulfoxides), lower hydrocarbon solvents and low molecular weight oils.

Preferably, said extract is an extract of *Schisandra chinensis* fruits, leaves or roots. The most preferred part of the plant for extracting lignans from *Schisandra chinensis* are the fruits (berries).

*Schisandra chinensis* lignans and extracts are substances tested on various diseases in the medical field with anti-viral, anti-oxidant or immunostimulant effects. For the first time, the present invention aims to use such lignans extracted from *Schisandra chinensis* as acaricides which cause the death of harmful mites and repel harmful mites, and deter such harmful mites from laying eggs, thus influencing oviposition, and deter the mite from feeding on a treated plant.

In using the extract, the composition and the complementary feed comprising an extract of *Schisandra chinensis* as an acaricide or as a mite repellent according to the present invention, said acaricide activity or mite repellent activity is against a bee parasitic mite, which belongs to the *Tetranychidae* family, or the *Parasitidae* family.

In particular, said mite belonging to the *Tetranychidae* family, preferably belongs to the genus *Panonychus* or the genus *Tetranychus,* said mite belonging to the *Parasitidae* family preferably belongs to the genus *Varroa* and more preferably to the species *Varroa destructor.*

The extract, composition, and complementary feed according to the present invention are for use in the treatment of varroatosis or varroosis, which is the bee disease with the greatest impact on beekeeping. This parasitic disease is caused by the *Varroa destructor mite,* initially described as a parasite of the Asian bee, *Apis cerana.* It was subsequently seen that the mite also infests the European bee, *Apis mellifera.*

*Varroa destructor* feeds on the fatty body of the brood, in which it reproduces, and on the adults of all castes of bees, causing malformations, behavioral alterations and reduction of the bee life expectancy, and consequent weakening and collapse of the families both due to the parasitic action and, above all, its action as a virus vector.

*V. destructor* is present in all continents where climatic conditions allow beekeeping and has profoundly changed beekeeping.

The introduction of *Varroa destructor* remains, more than 30 years after its entry into our country and Europe, one of the most important and dangerous problems for beekeeping. The impossibility of totally eradicating this mite from apiaries requires the adoption of a series of interventions and strategies which have the objective of containing the infestation within the threshold limits compatible with the development and productivity of the colonies. In recent years, research has mainly focused on the use of synthetic acaricide substances and, in case of organic beekeeping, the use of organic acids (oxalic acid and formic acid) and a terpene-based substance (thymol). The treatment with the Schisandra extract would be positioned in a strategic phase (spring-summer) without side effects on the family, during these months from March to August, in which each fallen mite allows us to avoid exponential growth in the autumn and would allow a surprising and currently unfeasible control method (buffer treatment).

The extract of *Schisandra spp.* containing Schisandrins is novel in the beekeeping landscape, as this chemical family (Lignans) has never been used in beekeeping; in fact, given the different mechanism of action, phenomena of cross-resistance on apiaries treated with Amitraz are excluded. Furthermore, in the tests carried out on families with or without brood, no damages were highlighted either in the short or in the long term, both to the bees and their metabolism, and to the queen and its oviposition (mortality statistically equal to witness).

This activity is by no means obvious; in fact, a number of substances with an acaricide-insecticide effect used in agriculture, even in microdoses, interfere with the normal metabolism of the non-target insect and can lead to disorientation, movement limitation and, in some cases, death (Abamectin, Acrinathrin, Rotenone, Pyrethrin). As will be apparent from the data shown in the Examples, it was surprisingly found that there were no side effects on the bees (*Apis mellifera* or *Apis cerana*)*,* nor were there any side effects on the colonies, either on the queen or the brood, with checks at 24-48-96 h from treatment and subsequently weekly up to 6 months from the first treatment. A constant activity of the family was observed, with a stable supply of honeycombs.

In a preferred embodiment, the use of the extract and the composition comprising a *Schisandra chinensis* extract as an acaricide or mite repellent according to the present invention is for the treatment of a substrate, preferably said substrate is an agricultural substrate or a substrate for beekeeping, preferably said agricultural substrate is selected from the group consisting of a growing substrate, soil or loam, and said substrate for beekeeping is preferably selected from the group consisting of hive, honeycomb, intercomb, frame, shallow box.

The dosage to be used depends on the surface to be treated, however an effective dose of the diluted product should be used for administration comprised in a range from 1 to 200 mg/l of Schisandrins (in all the forms mentioned above and based on the % of the same in the extract), preferably in a range from 15 to 100 mg/l, more preferably in a range from 30 to 80 mg/l.

In the present invention, when the definition "effective dose" or "biologically effective dose" is used, it is intended to mean a dose which allows to kill at least 65%, up to 100%, of the mites belonging to the *Tetranychidae* or Parasitidae families, present on the substrate.

The *Schisandra chinensis* extract or the composition comprising it can be used in different formulations and administered in different ways, for example with fixed nebulization systems, atomizers, backpack pumps or with formulations in the form of granules or powder, and much more.

In a further preferred embodiment, the *Schisandra chinensis* extract or the composition comprising it can be used as a biostimulant, fertilizer, tonic, or base substance.

It was surprisingly found that in the case of Schisandraceae extract containing Schisandrins (lignans), the toxicological profile is very low, the bibliographic data report an oral toxicity (LD50) for *Schisandra chinensis* seed powder of 3600 mg/kg in mice , while the ethanolic extract of the fruit did not show any toxicity on dogs or cats (as a comparison, a pyrethrum extract containing 40 g/l of pyrethrins, widely used in agriculture, has a LD50 on mice from 1030 to 2370 mg/kg). The formulations based on *Schisandra chinensis* extract tested in these studies contain from 1 to 10% w/w of Schisandrins. If we analyze the active substance, pure Schisandrin A (99.2%), this was able to induce convulsions when injected at 175 mg/kg body weight in mice, with paresis at 350 mg/kg, however, no deaths were observed. We will see later how the reported tests on insects and mites use an extract with a percentage of Schisandrins, as calculated by HPLC analysis, on average, from 5% to 10%, which was subsequently diluted in the various tests from 1 to 5% w/w in water.

The dose administered directly on the crop is hundreds of times lower than the acute toxicity tests on mice reported above for both the active substance (Schisandrin A) and the seeds dry extract (Schisandrins).

This allows us to state that the *Schisandra chinensis* extract or the composition comprising it have very low toxicity towards the operator, the user or the consumer, which is irrelevant.

In a fourth aspect, a method for treating a substrate is disclosed, comprising the step of applying to said substrate an effective dose of an extract of *Schisandra spp.,* preferably of *Schisandra chinensis,* or a composition comprising an extract of *Schisandra chinensis,* wherein said treatment is an acaricide or mite repellent treatment.

Preferably said effective dose allows to kill at least 70% of mites belonging to the *Tetranychidae* or *Parasitidae* families, wherein said effective dose is comprised in a range from 1 to 200 mg/l of Schisandrins, preferably in a range from 15 to 100 mg /I, more preferably in a range from 30 to 80 mg/l.

Preferably, in the method of treating a substrate, said substrate is an agricultural substrate or a beekeeping substrate.

All plants or agricultural substrates may be treated, preferably the plant to be treated is selected from the group consisting of a solanaceous crop, a graminaceous crop, a leguminous crop, an umbelliferous crop, a vegetable crop in general, and an arboreal crop.

Substrates for beekeeping may be treated, preferably said substrate is selected from the group consisting of hive, comb, intercomb, frame, shallow box. Examples of embodiments of the present invention are provided below for illustrative purposes.

### EXAMPLES

### Example 1: Extract Preparation

### - Schisandraceae fruit extract:

It is prepared starting from *Schisandra spp.* berries, the material is washed with water jets, then the water-based extraction process begins; 3 cycles of at least two hours each are carried out inside the extractor, reaching a temperature of 95-98°C. Subsequently, the product is filtered and concentrated reaching the density established according to the production protocol; the extract is dried in a stream of hot air and ground in a mill. Once the powder is obtained, sieving (80 mesh) is carried out. Final product control is then performed with humidity and quality tests (presence and amounts of heavy metals and evaluation of the presence of microorganisms dangerous for humans *E.coli, Salmonella, etc.*)*.* Once the qualitative standard is established, the quantitative analysis (with HPLC or UV method) of the Schisandrins content in the extract is carried out.

The extract can be used in a diluted form, for example: the extract prepared above is diluted in demineralized water at a dose of 1 g/l, without co-formulants and without modifying water pH to evaluate its effectiveness. An optimal dose is then sought to obtain an efficacy above 70% in the tests described below.

### Example 2

Composition Preparation. The composition reported as SG OIL, is a concentrated suspension made in laboratory; a vegetable oil with emulsifier allowed in organic farming is used, to which the sieved powdered extract containing the active substance (Schisandrin) is then added, little by little, into a graduated steel container and placed under the laboratory mixer for 20 minutes at 1000 RPM; water is also added (to bring up to volume). The product obtained is subsequently diluted to the established doses to carry out the efficacy tests. The physical-chemical and microbiological stability was then checked after 6 months storage at standard temperatures, which confirmed the optimal stability of the SG OIL composition.

### Example 3: TEST ON APHIDS

Laboratory tests were carried out to evaluate the insecticidal activity of the *Schisandra chinensis* extract on the Rhynchota order.

In particular, insects of the genera *Aphis, Nasonovia, Macrosiphum* and *Myzum* were collected in open fields from untreated pepper, lettuce and rose crops. Subsequently, these aphids were placed on leaves of Brassicacee or Fabaceae or Rosaceae in a number varying from 10 to 20 between adults and juveniles, and the leaf was placed in a Petri dish for 6-12 h.

Subsequently, the leaf is treated with a spray bottle which allows the correct spray distribution of the solution obtained from the dry extract of *Schisandra chinensis.* In this case 2 g/l of *Schisandra chinensis* extract containing 6% (HPLC analysis) of Schisandrins are diluted in different proportions; half of the content was however represented by Schisandrin A.

A viability count is performed at 24 and 48 hours after the start of treatment. Insects are subjected to incandescent light for 45 seconds to verify their viability: an insect is counted dead if, following exposure to the heat source, it has no motor reaction. The leaves are then treated with the solution obtained by diluting 2 g of the composition of Example 1 in one liter of water, and are left to dry naturally at a temperature ranging from 20°C to 25°C under normal laboratory conditions. The completely dry leaf is then closed in a Petri dish, and measurements are carried out to evaluate viability at 24 and 48 hours from the treatment (DAT). 5 replications are contemplated for each test.

The tests were carried out on various species, *Aphis gossypii, Aphis fabae, Nasonovia ribisnigri, Aphis pomi, Macrosiphum rosae, Myzus persicae, Myzus cerasi.*

Table 1 shows the efficacy of the Schisandraceae fruit extract prepared as described in Example 1 and diluted at a dose of 2 g/l (T2 SG), compared to the witness (T1 Untreated) of a test with *Aphis gossypii.*

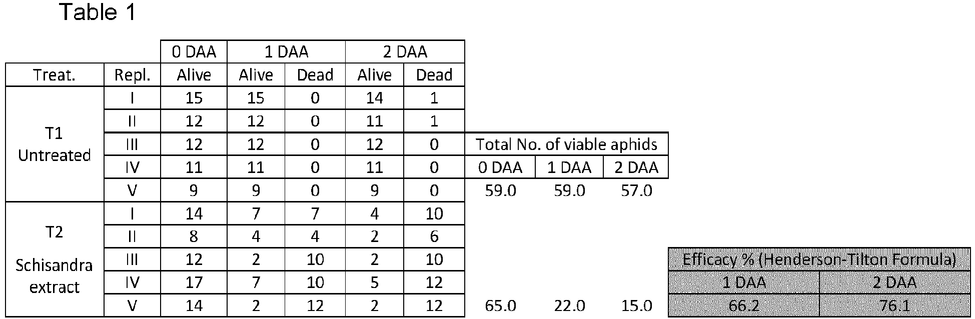

In T2 there is an efficacy of over 75% on *Aphis gossypii,* 2 days after the treatment. As regards the other species, differences in efficacy are reported at 48 hours after the treatment depending on the species of aphid treated:
- An efficacy of 68% resulted from the test on *Macrosiphum rosae,* using the extract as is; while
- An efficacy of 90% resulted from the test on *Aphis pomi,* using the product tagged SG OIL prepared according to Example 2,

### Example 4: TEST ON MITES

Laboratory tests were carried out to evaluate the acaricide activity of the extract prepared according to Example 1 on insects belonging to the *Tetranychidae* family; in particular, insects of the *Tetranychus urticae* and *Panonychus ulmi* species were collected in open field from untreated tomato crops, and placed on discs of Solanaceae leaves having a diameter of 8 cm in a variable number from 4 to 6 adults, and placed in Petri dishes for 24-48 h.

Subsequently, the leaf of each Petri dish is treated with a spray bottle which allows correct spray distribution of the solution. In this case 2 g/l of *Schisandra spp.* extract containing 5% (HPLC analysis) of Lignans from different suppliers are diluted to evaluate the quality, purity, and differences in the composition of Schisandrins. In total, 5 different extracts with manufacturer's declared amount ≥ 5% were tested. The treated leaf discs are left to dry naturally at a temperature between 20-25°C under standard laboratory conditions. The completely dry leaf is then closed in a Petri dish and measurements are carried out to evaluate viability at 24 and 48 hours from the treatment (DAA). Death is confirmed following mite exposure to an incandescent lamp for 45 seconds; exposure to heat leads to an immediate reaction in case of viability. 5 replications are contemplated for each test. The test data refer to *T. urticae.*

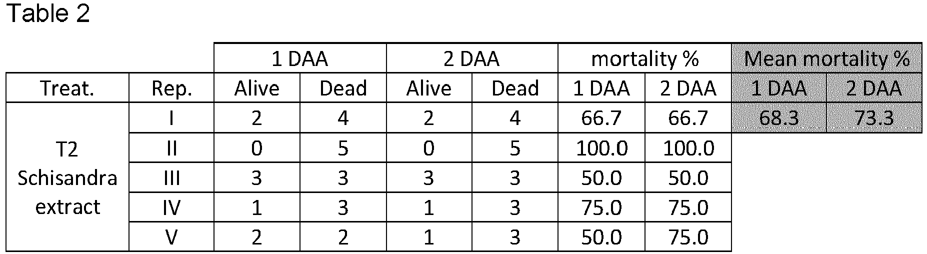

Tests confirm a mite mortality of more than 70% of adult individuals of the *Tetranychidae* family. So, in addition to being an insecticide, the substance has a marked acaricide activity. This last feature is not obvious, especially in products used in organic farming; in fact, an efficacy both on aphids or lepidoptera and on mites is rarely found. This research confirms target selectivity and a double effect that limits mite occurence.

### Example 5: TEST ON LEPIDOPTERA

Laboratory tests were carried out, by means of a recognized test center with methods approved at the European level, to evaluate the insecticide activity on Lepidoptera; in particular, *Tuta absoluta* larvae were collected in open field from tomato crops. Subsequently, two studies were carried out:
- First study: a treatment of tomato leaves which, upon drying, were placed in contact with *Tuta absoluta* larvae of II and III age; data are collected at 24h and 48h;
- Second study: the microlepidoptera is already present on the tomato leaf surface and the SG OIL product is distributed on it to study any intrinsic systemic or cytotropic activity of the substance. In this case, 4 ml/l of the composition containing Schisandrins of Example 2, labelled as SG OIL Schisandraceae extract containing 6% (HPLC analysis) of Schisandrins, are diluted. The leaves are kept in a Petri dish at a temperature between 20°C - 25°C. The number of larvae per leaf is equal to 5.

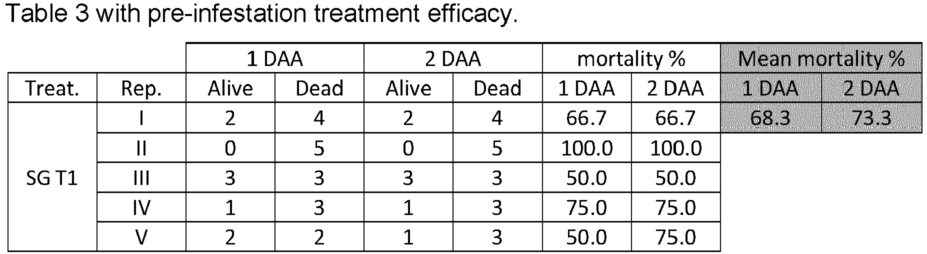

**Table 4 with post-infestation treatment efficacy.**

| | | 1 DAA | | 2 DAA | | mortality % | | Mean mortality % | |
|---|---|---|---|---|---|---|---|---|---|
| Treat. | Rep. | Alive | Dead | Alive | Dead | 1 DAA | 2 DAA | 1 DAA | 2 DAA |
| SG T2 | I | 4 | 1 | 4 | 1 | 16.7 | 16.7 | 3.3 | 8.3 |
| | II | 5 | 0 | 5 | 0 | 0.0 | 0.0 | | |
| | III | 5 | 0 | 5 | 0 | 0.0 | 0.0 | | |
| | IV | 5 | 0 | 5 | 0 | 0.0 | 0.0 | | |
| | V | 5 | 0 | 4 | 1 | 0.0 | 25.0 | | |

The activity of Lignans or Schisandrins is one of the hypothetical solutions for the future of organic farming as both chemical and biologicals products currently on the market are experiencing huge difficulties in containing certain insects given the increasingly known resistance phenomena; even against *Tuta absoluta,* the same tests carried out as in T1 with active ingredients currently on the market (Rynaxypyr, Azadirachtin, Emamectin Benzoate) do not exceed the mean mortality rate of 50% at 48-hour. Based on T2 data, a systemic or cytotropic activity of SG OIL composition or of the *Schisandra spp.* extract is at present excluded, and a product to be used in a preventive way or at the beginning of the infestation is hypothesized.

Furthermore, it was surprisingly tested that the insecticidal effect is not statistically significant on various adult insects, in fact laboratory tests were carried out on adult forms of *Frankiniella occidentalis, Halyomorpha halys, Ceratitis capitate, Palomena prasina, Leptinotarsa decemlineata, Popillia japonica* using the same laboratory methods previously reported, which however did not show any insecticide effects of scientific and statistical significance. This means that the activity certainly should be evaluated and confirmed only on some targets, as highlighted in this study.

### Example 6: TEST ON Varroa destructor

Treatment tests were carried out against the parasitic disease caused by *Varroa destructor* mite.

The tests were carried out on 15 colonies divided into three groups with homogeneous consistency and were placed in Dadant-Blatt hives of 10 honeycombs with diagnostic anti-varroa mobile bottom which is coated before treatment with vegetable oil. Data on treatment efficacy were subjected to analysis of variance (ANOVA).

The three groups are:
- Witness (denoted with "T"), corresponding to the untreated group, to highlight a natural fall of *V. destructor;*
- Control with oxalic acid (denoted with "AO"), treated with a dose of 45 g of AO dihydrate/ I of sugar water, 1:1 sugar weight to water weight; and
- *Schisandra chinensis* extract of the present invention (denoted with "SE"), treated with a dose of 50 g of formulation/ I of deionized water. The used *Schisandra chinensis* extract has the following formulation (w/w): 50% *Schisandra chinensis* extract, 20% sugars, 20% vitamins, 10% inerts, co-formulants, additives. The formulation may vary with *Schisandra chinensis* extract in a range from 5% to 50%, preferably in the range from 15% to 40%, more preferably in the range from 20% to 30%.

**Table 5: Scheme of hives' positioning in the apiary:**

| | | | | | | | | | | | | | | |
|---|---|---|---|---|---|---|---|---|---|---|---|---|---|---|
| T | AO | SE | T | AO | SE | T | AO | SE | T | AO | SE | T | AO | SE |

The treatment was carried out by dripping using a 50 ml syringe; 5 ml of solution was the dose used for each space between the frames (intercomb).

The tests were carried out both in the summer months (in the presence of brood) and in the month of November (absence of brood) to also evaluate any conditioning of the *Schisandra chinensis-based* formulation on the brood development or on emergence. For applications in the month of September (Italy, Piemonte, CN Province), the temperatures during the treatment were in a range of 20-24° C, the temperatures were also recorded after the extract application (min 15° - max 27° C daily in the 48 hours following the treatment). No influence of external temperatures on the effectiveness of the administration was highlighted. The efficacy of the treatment was calculated by applying the formula: efficacy = number of mites fallen following the treatment! total number of mites fallen (treatment + control).

**TABLE 6. Data processed as efficacy % in the absence of brood compared to a witness with data collection at 48 and 96 h from treatment, with mortality data expressed by numerical count of individuals in each family.**

| ITEM | EFFICACY at 48 H % | EFFICACY at 96 H % | MORTALITY at 24 h DAT |
|---|---|---|---|
| OXALIC ACID | 98 a | 97.6 a | 9 a |
| SCHISANDRA | 60.7 b | 57.4 b | 3 a |
| EXTRACT | | | |
| FORMULATION (SE) | | | |
| WITNESS | 0 c | 5 c | 4 a |

The mortality data in the absence of brood (November) confirm that the extract did not show any effects on insect viability.

In the summer treatments, an increase in the number of broods was found in the group treated with SE (Schisandra extract (*Schisandra chinensis*) according to the invention) compared to the witness. Upon visual examination by expert beekeepers, an increase of 20% was estimated.

This allows us to surprisingly affirm the increase in the hive well-being (in addition to control of *Varroa destructor*)*,* the use of *Schisandra chinensis* extract alone or in mixture with other nutrients in an ideal formulation as a complementary feed, which allows to increase the activity of the family also leading to a significant decrease in the number of bees parasitized by the mite.

None of the families treated during the season by using different treatments with the extract according to the invention showed damage from virosis (effect due to an increase in Varroa which is the vector, above the limits of direct damage alone).

A historical analysis on substances of vegetable origin that have shown an effect on *Varroa destructor* (*e.g.,* Rotenone, Azadirachtin), with percentages of efficacy in the laboratory similar to those shown in Table 6 for SE formulation have, however, shown side effects on bees. The formulation based on *Schisandra chinensis* does not show any toxicity towards the operator or the environment and is free of bioaccumulation risks. *Schisandra chinensis* is a substance allowed by EFSA as a human food supplement and as an additive in complementary feeds; *Schisandra chinensis:* Omicha tincture.

The formulation used has a formula (w/w) of 50% *Schisandra chinensis* extract, 20% sugars, 20% vitamins, 10% inerts, co-formulants, additives, which increase persistence and solubility. All the substances indicated are included in Annex I of the EU Reg. 1831/03 which lists all the substances allowed in the zootechnical feed sector.

From the detailed description and from the Examples reported above, the advantages achieved by means of the extract and the composition described in the present invention, which showed a surprising activity against mites and insects harmful to plants and crops, with the advantages of being eco-sustainable and environmentally compatible natural compounds, are apparent.

## Claims

1. Use of an extract or a tincture of *Schisandra spp.,* preferably of *Schisandra chinensis* as an acaricide, said extract comprising at least the lignans selected from the group consisting of: schisandrin, schizandrol B, and schisantherin A.

2. Use of a composition comprising an extract of *Schisandra spp.,* preferably of *Schisandra chinensis* as an acaricide, wherein:
- said extract of *Schisandra chinensis* comprises at least the lignans selected from the group consisting of: schisandrin, schisandrol B, and schisantherin A;
- said extract of *Schisandra chinensis* is the only active ingredient of said composition; and
- said composition comprises a carrier, additive, emulsifier, surfactant, adjuvant and/or diluent acceptable in the agrochemical field or the veterinary field, preferably in beekeeping.

3. Use of a composition comprising an extract of *Schisandra spp.,* preferably of *Schisandra chinensis* as a complementary feed, wherein:
- said extract of *Schisandra chinensis* comprises at least the lignans selected from the group consisting of: schisandrin, schisandrol B, and schisantherin A; and
- said composition comprises excipients suitable for the final formulation.

4. The use according to any one of claims 1 to 3, wherein said extract or said composition or said complementary feed further comprises at least one of the lignans selected from the group consisting of: gomisin B, gomisin N and pregomisin.

5. The use according to any one of claims 1 to 4, wherein said schisandrin is schisandrin A, schisandrin B and/or schisandrin C.

6. The use according to any one of claims 1 to 5, wherein said extract further comprises one or more sugars and one or more vitamins.

7. The use according to any one of claims 1 to 6, wherein said acaricide or mite repellent is against a bee parasitic mite, a mite belonging to the *Parasitidae* family, or a mite belonging to the *Tetranychidae* family.

8. The use according to claim 7, wherein said mite belonging to the *Parasitidae* family belongs to the genus *Varroa,* and wherein said mite belonging to the *Tetranychidae* family belongs to the genus *Panonychus* or the genus *Tetranychus.*

9. The use according to any one of claims 1 to 8, wherein said mite is *Varroa destructor.*

10. The use according to any one of claims 1 to 9, for the treatment of a substrate, preferably said substrate being an agricultural substrate, preferably said agricultural substrate or a substrate for beekeeping.

11. The use according to any one of claims 1 to 10, for the treatment of a substrate, wherein said substrate is a substrate for beekeeping, preferably said substrate is selected from the group consisting of beehive, honeycomb, intercomb, frame, shallow box.

12. Method for treating a substrate, comprising the step of applying to said substrate an effective dose of an extract of *Schisandra spp.,* preferably of *Schisandra chinensis,* or a composition comprising an extract of *Schisandra chinensis,* wherein said extract is an acaricide treatment.

13. The method according to claim 12, wherein said effective dose is comprised in a range from 1 to 200 mg/l of Schisandrins, preferably in a range from 15 to 100 mg/l, more preferably in a range from 30 to 80 mg /I, and it allows to kill at least 70% of mites belonging to the *Tetranychidae* family.

14. The method according to any one of claims 12 or 13, wherein said substrate is an agricultural substrate.

15. The method according to any one of claims 12 or 13, wherein said substrate is a substrate for beekeeping.
